Europäisches Patentamt

European Patent Office

Office européen des brevets

(19)

(11) Veröffentlichungsnummer : **0 386 608 B1**

## (12) EUROPÄISCHE PATENTSCHRIFT

(45) Veröffentlichungstag der Patentschrift :
**19.11.92 Patentblatt 92/47**

(51) Int. Cl.$^5$ : **G01J 3/08,** G02B 26/04

(21) Anmeldenummer : **90103905.7**

(22) Anmeldetag : **28.02.90**

(54) **Einrichtung zur Strahlmodulation im Strahlengang photometrischer Analysatoren.**

(30) Priorität : **06.03.89 DE 8902686 U**

(43) Veröffentlichungstag der Anmeldung :
**12.09.90 Patentblatt 90/37**

(45) Bekanntmachung des Hinweises auf die
Patenterteilung :
**19.11.92 Patentblatt 92/47**

(84) Benannte Vertragsstaaten :
**DE FR GB IT**

(56) Entgegenhaltungen :
**EP-A- 0 301 251**
**DE-A- 2 132 973**
**DE-A- 2 402 865**
**DE-A- 2 608 669**

(73) Patentinhaber : **SIEMENS**
**AKTIENGESELLSCHAFT**
**Wittelsbacherplatz 2**
**W-8000 München 2 (DE)**

(72) Erfinder : **Aidam, Eckhard**
**Ulmenstrasse 7**
**W-6729 Jockgrim (DE)**
Erfinder : **Weinel, Johann**
**Bärenweg 26**
**W-7500 Karlsruhe 21 (DE)**

EP 0 386 608 B1

Jouve, 18, rue Saint-Denis, 75001 PARIS

# Beschreibung

Die Erfindung betrifft eine Einrichtung zur Strahlmodulation im Strahlengang photometrischer Analysatoren, mit einer scheibenförmigen Umlaufblende, die als flachzylindrischer Rotor eines drehzahlregelbaren Wechselstrom-Induktionsmotors ausgebildet ist.

Um den Einfluß von Störsignalen zu mindern oder auszuschalten, findet Strahlmodulation bei optischen Meßgeräten häufig Verwendung. Dazu wird, wie bekannt, im einfachsten Falle eine scheibenförmige, mit Durchbrechungen für den Strahldurchtritt versehene, elektromotorisch angetriebene Umlaufblende in den Strahlengang gebracht und dieser periodisch unterbrochen.

Strahlmodulatoren der eingangs genannten Art mit flachzylindrischem, von einem Drehfeld angetriebenen Rotor sind in Verbindung mit Geräten zur Messung der Konzentration einer Gaskomponente in einem Gasgemisch (Meßgas) z. B. aus der DE-AS 21 32 973 bekannt.

In der DE-PS 26 08 669 ist ein Strahlmodulator beschrieben, bei welchem die Umlaufblende der scheibenförmige Rotor eines Ferrarismotors ist, mit zwei Elektromagnetsystemen, deren Polschuhe außerhalb des Bereichs der Strahldurchtrittsöffnungen auf gegenüberliegenden Seiten der Umlaufblende angeordnet sind. Drehzahlstellung und -regelung erfolgen durch Beeinflussung der Phasenlage oder des Amplitudenverhältnisses der die Elektromagnetsysteme speisenden Wechselströme.

Es hat sich jedoch bei Induktionsmotoren vom Ferraris-Typ mit ihren relativ dünnen und sehr leichten Scheibenläufern herausgestellt, daß bei einem Dicken-/Durchmesserverhältnis der Rotorscheibe von über 1 : 100 infolge von Lagerproblemen und der durch die Anordnung der Strahldurchtrittsöffnungen bedingten ungleichmäßigen Massenverteilung Schwingungen auftreten, die den gleichmäßigen Lauf der Umlaufblende beeinträchtigen.

Es besteht die Aufgabe, die Betriebseigenschaften eines Strahlmodulators, dessen Umlaufblende als scheibenförmiger Rotor eines Induktionsmotors ausgebildet ist, zu verbessern.

Eine Lösung der Aufgabe wird in einer Einrichtung der eingangs genannten Art gesehen, welche die Merkmale des Anspruchs 1 aufweist.

Die kreisringförmige Teilfläche der Umlaufblende mit ihren mit weichmagnetischen Stabelementen versehen, gleichmäßig angeordneten Schlitzen ist als Käfigläufer eines Asynchronmotors bekannter Bauart anzusehen. Der induzierte Strom fließt, im Gegensatz zu den Wirbelstromantrieben, in definierten Strombahnen.

Es können Umlaufblenden mit größerer Masse und infolge des größeren Trägheitsmoments gleichmäßigeren Laufeigenschaften eingesetzt werden.

Werden die Pole der Elektromagnetsysteme auf der einen Seite der kreisringförmigen Teilfläche angeordnet, so ergeben sich besonders raumsparende Einbaumöglichkeiten, insbesondere dann, wenn der magnetische Rückschluß in Form einer Metallschicht hoher Permeabilität auf der den Polen gegenüberliegenden Seite der den Rotor bildenden kreisringförmigen Teilfläche aufgebracht ist.

Die Einstellung und Regelung der Drehzahl wird in an sich bekannter Weise durch Beeinflussung der Phasenlage, des Amplitudenverhältnisses oder der Speisefrequenz der elektromagnetischen Systeme bewerkstelligt.

Zur Erläuterung der Erfindung sind in den Figuren 1 bis 5 Ausführungsbeispiele der erfindungsgemäßen Einrichtung schematisch dargestellt.

Figur 1 zeigt eine Umlaufblende im Querschnitt,
Figur 2 in einer Ansicht von oben,
Figur 3 eine Ausführungsform eines Motors, der die als Rotor wirkende Umlaufblende und zwei erzeugende Magnetsysteme aufweist,
Figur 4 eine andere Ausführungsform mit einer, auch für andere Ausführungsformen geltenden Drehzahlregelung,
Figur 5 die Ausbildung des magnetischen Rückschlusses bei der Ausführungsform nach Figur 4,
Figur 6 eine andere Ausführungsform des magnetischen Rückschlusses.

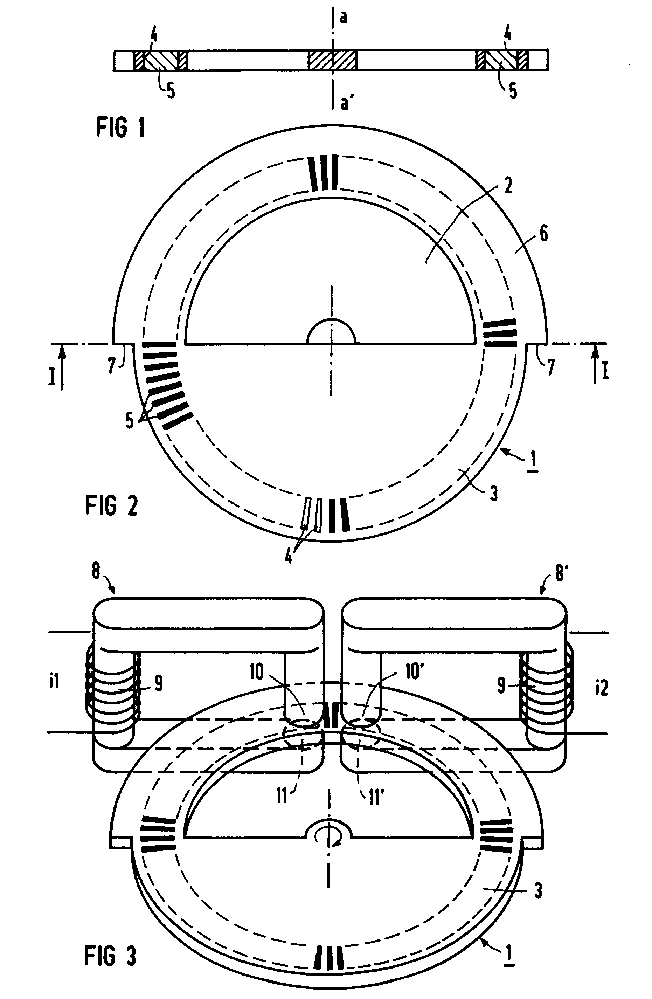

Die in den Figuren 1 und 2 in zwei Ansichten dargestellte Umlaufblende 1 besteht im wesentlichen aus einer flachzylindrischen Scheibe aus einem NE-Metall, beispielsweise Aluminium, die um die Achse a - a' drehbar gelagert ist und eine einen Sektor von 180° umfassende Strahldurchtrittsöffnung 2 aufweist, so daß bei jeder Umdrehung der Strahl einmal unterbrochen wird. In einer die Strahldurchtrittsöffnung 2 umgebenden kreisförmigen Teilfläche 3 sind in gleichmäßigen Abständen radial gerichtete schlitzförmige Durchbrechungen 4 angebracht, in welchen stabförmige Elemente 5 eines weichmagnetischen Werkstoffs angeordnet sind.

Die stabförmigen Elemente lassen sich durch Einbringen einer aushärtbaren Ferritpulver-Suspension auf einfache Weise herstellen.

In dem Bereich der Strahldurchtrittsöffnung 2 ist der Durchmesser der Umlaufblende 1 zum Zwecke des Massenausgleichs vergrößert, so daß ein halbkreisförmiger Teilabschnitt 6 entsteht, der rechtwinklig einspringende Kanten 7 beim Übergang zu dem kleineren Durchmesser der Umlaufblende 1 aufweist.

In Figur 3 ist die Funktion der Umlaufblende 1 als Rotor eines Wechselstrom-Asynchronmotors schematisch dargestellt. Zwei Elektromagnetsysteme 8, 8', deren Wicklungen 9 und 9' mit Wechselströmen $i_1$ und $i_2$ gespeist werden, bilden Polpaare 10, 10', durch deren Luftspalte 11, 11' sich die als Käfiganker wirkende kreisringförmige Teilfläche 3 der Umlaufblende 1 bewegt.

Zur Erzeugung des antreibenden Drehfeldes besteht zwischen den Speiseströmen $i_1$ und $i_2$ eine Phasenverschiebung von maximal $\pi/2$.

Die Einstellung der Drehzahl läßt sich durch Änderung des Phasenwinkels zwischen den Speiseströmen $i_1$ und $i_2$, deren Amplitudenverhältnis oder über Änderung der Speisefrequenz erreichen.

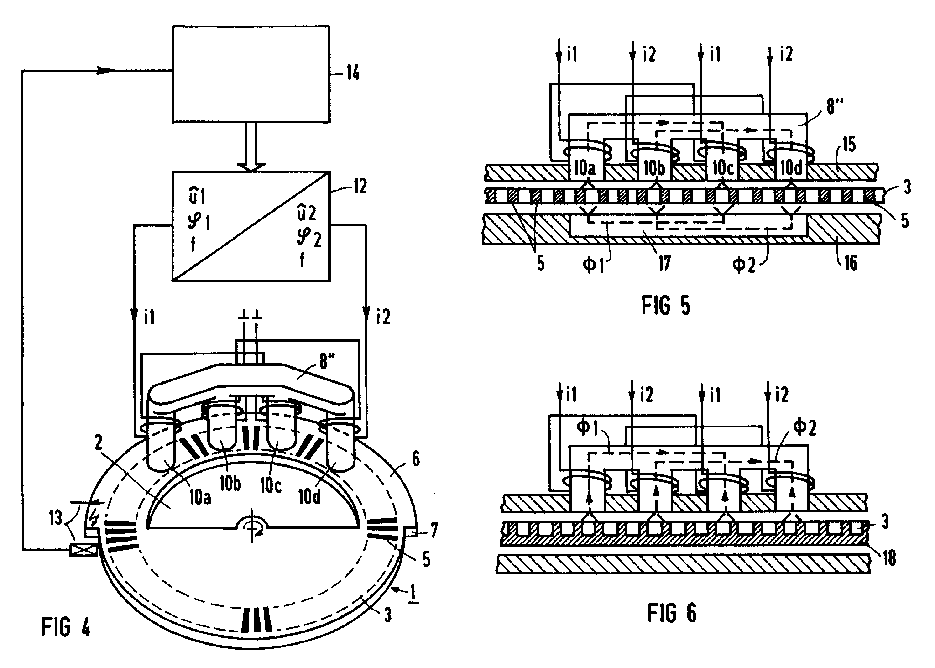

Bei der in Figur 4 dargestellten anderen Ausführungsform des Induktionsmotors ist ein Mehrfach-Elektromagnetsystem 8″ verwendet, dessen Magnetpole 10a, 10b, 10c und 10d sich gegenüber der einen Seite der kreisringförmigen Teilfläche 3 befinden. Ein - hier nicht gezeichneter - magnetischer Rückschluß ist auf der gegenüberliegenden Seite der Teilfläche 3 vorgesehen.

Die zum Betrieb eines Wechselstrom-Käfiganker-Motors benötigten phasenverschobenen Speiseströme $i_1$ und $i_2$ werden in dem Steuergerät 12 erzeugt.

Zur Einstellung der Drehzahl kann das Verhältnis der Phasenwinkel $\varphi 1$ und $\varphi 2$ oder das Verhältnis der Amplituden $\hat{u}1$ und $\hat{u}2$ bzw. die Frequenz f der Speiseströme $i_1$ und $i_2$ auf einen vorgegebenen Sollwert eingestellt werden.

Zur Gewinnung eines Drehzahl-Istwerts ist in an sich bekannter Weise ein Geber 13, beispielsweise eine Lichtschranke, vorgesehen, die sich im Weg des halbkreisringförmigen Teilabschnitts 6 der Umlaufblende 1 befindet und von den einspringenden Kanten 7 betätigt wird. Der Drehzahl-Istwert wird einem Rechner 14 mit einem Regel-Algorithmus zugeführt, der die zur Drehzahl-Konstanthaltung notwendigen Stellbefehle an das Steuergerät 12 gibt.

Figur 5 zeigt den Aufbau und die Wirkungsweise eines kombinierten Elektromagnetsystems 8″ gemäß Figur 4 mit seinen über ein gemeinsames Joch verbundenen Polen 10a, 10b, 10c und 10d, deren Schenkelwicklungen in der angezeigten Weise von den Wechselströmen $i_1$ und $i_2$ gespeist werden und die räumlich und zeitlich gegeneinander verschobene Magnetflüsse $\phi_1$ und $\phi_2$ erzeugen. Das Magnetsystem 8″ ist in einem Gehäuseoberteil 15 angeordnet, ein magnetischer Rückschluß 17 in dem Gehäuseunterteil 16, die kreisringförmige Teilfläche 3 der Umlaufblende mit ihren stabförmigen, weichmagnetischen Elementen 5 bewegt sich in dem von den Polen 10a bis 10d und dem magnetischen Rückschluß 17 gebildeten Luftspalt.

In Figur 6 ist eine andere Art des magnetischen Rückschlusses dargestellt. Er besteht aus einer Metallschicht 18 hoher Permeabilität, beispielsweise aus Mu-Metall, die auf der den Magnetpolen abgekehrten Seite der kreisringförmigen Teilfläche 3 aufgebracht ist.

## Patentansprüche

1. Einrichtung zur Strahlmodulation im Strahlengang photometrischer Analysatoren, mit einer scheibenförmigen Umlaufblende aus NE-Metall, die als flachzylindrischer Rotor eines drehzahlregelbaren Wechselstrom-Induktionsmotors ausgebildet ist mit mindestens zwei Elektromagnetsystemen deren Polschuhe auf gegenüberliegenden Seiten des Rotors angeordnet sind und die zur Drehzahlstellung mit hinsichtlich Phasenlage oder Amplitude unterschiedlichen Wechselströmen ($i_1$, $i_2$) gespeist sind, **dadurch gekennzeichnet,** daß die scheibenförmige Umlaufblende (1) auf einer kreisringförmigen Teilfläche (3) außerhalb ihrer Strahldurchtrittsöffnungen (2) in gleichmäßigen Abständen angebrachte, radial gerichtete, schlitzförmige Durchbrechungen (4) aufweist, in welchen stabförmige Elemente (5) eines weichmagnetischen Werkstoffs angeordnet sind,
und daß die mindestens zwei Elektromagnetsysteme (8, 8′, 8″) so angeordnet sind, daß sich die kreisringförmige Teilfläche (3) der Umlaufblende (1) durch die Luftspalte (11) der Elektromagnetsysteme bewegt.

2. Einrichtung nach Anspruch 1, **dadurch gekennzeichnet,** daß die stabförmigen Elemente (5) durch Einbringen einer aushärtbaren Ferritpulver-Suspension in die schlitzförmigen Durchbrechungen (4) hergestellt sind.

3. Einrichtung nach Anspruch 1, **gekennzeichnet durch** zwei Elektromagnetsysteme, deren Magnetpole (10a bis 10d) gegenüber der einen Seite der kreisringförmigen Teilfläche (3) der Umlaufblende (1) und magnetische Rückschlüsse (17) gegenüber der anderen Seite angeordnet sind.

4. Einrichtung nach Anspruch 3, **dadurch gekennzeichnet,** daß der magnetische Rückschluß (17) aus einer Metallschicht (18) hoher Permeabilität besteht, die auf einer Seite der Umlaufblende auf die Teilfläche (3) aufgebracht ist.

5. Einrichtung nach Anspruch 4, **dadurch gekennzeichnet,** daß die Metallschicht (18) aus Mu-Metall besteht.

6. Einrichtung nach Anspruch 1, **dadurch gekennzeichnet,** daß zwei Elektromagnetsysteme (8, 8′ bzw. 8″) mit Wechselströmen ($i_1$, $i_2$) einstellbarer Frequenz (f) bei konstantem Phasenwinkel von 90° gespeist werden und mittels Änderung der Frequenz (f) die Drehzahl der Umlaufblende (1) geregelt wird.

**7.** Einrichtung nach Anspruch 1, dadurch gekennzeichnet, daß die Elektromagnetsysteme zur Drehzahlstellung mit hinsichtlich der Frequenz unterschiedlichen Wechselströmen gespeist sind.

## Claims

**1.** Device for modulating beams in the beam path of photometric analyzers, having a disc-shaped rotating shutter made of non-ferrous metal which is formed as a flat-cylindrical rotor of a variable-speed alternating current induction motor, having at least two electromagnetic systems the pole shoes of which are arranged on opposite sides of the rotor and which, for the purpose of speed variation, are fed with alternating currents ($i_1$, $i_2$) which differ with regard to phase relationship or amplitude, characterised in that the disc-shaped rotating shutter (1) has, on a circular ring-shaped surface portion (3) outside its beam-passage openings (2), slot-shaped perforations (4) which are directed radially and which are provided at uniform intervals and in which bar-shaped elements (5) of a soft-magnetic material are arranged, and in that the at least two electromagnetic systems (8, 8', 8") are arranged in such a way that the circular ring-shaped surface portion (3) of the rotating shutter (1) is moved through the air gaps (11) of the electromagnetic systems.

**2.** Device according to claim 1, characterised in that the bar-shaped elements (5) are produced by introducing a ferrite powder suspension, which is capable of hardening, into the slot-shaped perforations (4).

**3.** Device according to claim 1, characterised by two electromagnetic systems, the magnet poles (10a to 10d) of which are arranged in relation to the one side of the circular-ring-shaped surface portion (3) of the rotating shutter (1) and the magnetic returns (17) of which are arranged in relation to the other side.

**4.** Device according to claim 3, characterised in that the magnetic return (17) consists of a metal layer (18) of high permeability which is applied to the surface portion (3) on one side of the rotating shutter.

**5.** Device according to claim 4, characterised in that the metal layer (18) consists of mu-metal.

**6.** Device according to claim 1, characterised in that two electromagnetic systems (8, 8' or 8" respectively) are fed with alternating currents ($i_1$, $i_2$) of

adjustable frequency (f) with constant phase angle of 90° and the speed of the rotating shutter (1) is controlled by means of changing the frequency (f).

**7.** Device according to claim 1, characterised in that the electromagnetic systems for the purposes of speed variation are fed with alternating currents which differ with regard to the frequency.

## Revendications

**1.** Dispositif pour moduler un rayonnement dans le trajet de rayonnement d'analyseurs photométriques, comportant un obturateur rotatif en forme de disque formé d'un métal non ferreux, qui est agencé sous la forme d'un rotor cylindrique plat d'un moteur à induction à courant alternatif dont la vitesse de rotation est réglable, et comportant au moins deux systèmes d'électroaimants, dont les pièces polaires sont disposées sur des côtés opposés du rotor et qui, pour déterminer la vitesse de rotation, sont alimentées par des courants alternatifs ($i_1$,$i_2$) ayant des positions de phase ou des amplitudes différentes, caractérisé par le fait que l'obturateur rotatif en forme de disque (1) possède, sur une surface partielle en forme d'anneau circulaire (3), à l'extérieur de ses ouvertures (2) de passage du rayonnement, des passages radiaux en forme de fentes (4), qui sont disposés à des distances régulières et dans lesquels sont disposés des éléments en forme de barreaux (5) d'un matériau magnétique doux, et

que les systèmes d'électroaimants (8,8',8"), prévus au moins au nombre de deux, sont disposés de telle sorte que la surface partielle en forme d'anneau circulaire (3) de l'obturateur rotatif (1) se déplace dans les entrefers (11) des systèmes d'électroaimants.

**2.** Dispositif suivant la revendication 1, caractérisé par le fait que les éléments en forme de barreaux (5) sont fabriqués par insertion d'une suspension durcissable d'une poudre de ferrite dans les passages en forme de fentes (4).

**3.** Dispositif suivant la revendication 1, caractérisé par deux systèmes d'électroaimants, dont les pôles magnétiques (10a à 10d) sont disposés en vis-à-vis d'une face de la surface partielle en forme d'anneau circulaire (3) de l'obturateur rotatif (1) et dont les retours magnétiques (17) sont disposés en vis-à-vis de l'autre face.

**4.** Dispositif suivant la revendication 3, caractérisé par le fait que le retour magnétique (17) est constitué par une couche métallique (18) de haute perméabilité, qui est disposée sur la surface partielle (3) sur une face de l'obturateur rotatif.

5. Dispositif suivant la revendication 4, caractérisé par le fait que la couche métallique (18) est formée de mumétal.

6. Dispositif suivant la revendication 1, caractérisé par le fait que deux systèmes d'électroaimants (8,8' ou 8″) sont alimentés par des courants alternatifs ($i_1$,$i_2$) possédant une fréquence (f) réglable, pour un angle de phase constant de 90°, et que la vitesse de rotation de l'obturateur rotatif (1) est réglée moyennant une modification de la fréquence (f).

7. Dispositif suivant la revendication 1, caractérisé par le fait que pour régler la vitesse de rotation, les systèmes d'électroaimants sont alimentés par des courants alternatifs dont les fréquences sont différentes.

FIG 1

FIG 2

FIG 3

EP 0 386 608 B1

FIG 4

$\hat{u}1$ $\mathscr{S}1$ f $\hat{u}2$ $\mathscr{S}2$ f

14

12

8"

i1 i2

10a 10b 10c 10d

2 6

13 7

5 5

3 1

FIG 5

i1 i2 i1 i2

8"

10a 10b 10c 10d

15

3

5

5 $\phi1$ 17 $\phi2$ 16

FIG 6

i1 i2 i1 i2

$\phi1$ $\phi2$

3

18